# EUROPEAN PATENT SPECIFICATION

(11) **EP 2 263 156 B1**
(45) Date of publication and mention of the grant of the patent: **03.07.2013**
(21) Application number: 09731427.2
(22) Date of filing: 30.03.2009
(51) Int. Cl.: G06F 13/38, G06K 7/00

(54) **IDENTIFICATION OF MEMORY CARDS BY HOST**
IDENTIFIZIERUNG VON SPEICHERKARTEN DURCH HOSTS
IDENTIFICATION DE CARTES DE MÉMOIRE PAR UN HÔTE

(30) Priority: 09.04.2008 US 82356
(43) Date of publication of application: 22.12.2010
(73) Proprietor: SanDisk Technologies Inc., Plano, Texas 75024 (US)
(72) Inventor: TANIK, Haluk, K., Mountain View CA 94040 (US); YUAN, Po, Milpitas CA 95035 (US); CHANG, Robert, C., Danville CA 94506 (US); RASIZADE, Oktay, Castro Valley CA 94546 (US); QAWAMI, Bahman, San Jose CA 95138 (US); SABET-SHARGHI, Farshid, Los Altos Hills CA 94024 (US)
(74) Representative: Hitchcock, Esmond Antony
(86) International application number: PCT/US2009/001963
(87) International publication number: WO 2009/126215

(56) References cited:
- EP-A1- 1 752 917
- US-A1- 2005 045 721

## Description

This invention relates to memory cards and systems containing memory cards, including host systems that interface with two or more memory cards.

Nonvolatile memory systems are used in various applications. Some nonvolatile memory systems are embedded in a larger system such as a personal computer. Other nonvolatile memory systems are removably connected to a host system and may be interchanged between different host systems. Examples of such removable memory systems include memory cards and USB flash drives. Electronic circuit cards, including non-volatile memory cards, have been commercially implemented according to a number of well-known standards. Memory cards are used with personal computers, cellular telephones, personal digital assistants (PDAs), digital still cameras, digital movie cameras, portable audio players and other host electronic devices for the storage of large amounts of data. Such cards usually contain a re-programmable non-volatile semiconductor memory cell array along with a controller that controls and supports operation of the memory cell array and interfaces with a host to which the card is connected. Several of the same type of card may be interchanged in a host card slot designed to accept that type of card. However, the development of the many electronic card standards has created different types of cards that are incompatible with each other in various degrees. A card made according to one standard is usually not useable with a host designed to operate with a card of another standard. In some cases, cards may support the same standard, but have different form factors, e.g. SD, MiniSD, and MicroSD cards follow the SD standard but have different form factors. Memory card standards and/or form factors include PC Card, CompactFlash™ card (CF™ card), SmartMedia™ card, MultiMediaCard (MMC™), Secure Digital (SD) card, a miniSD™ card, Subscriber Identity Module (SIM), Memory Stick™, Memory Stick Duo card and microSD/TransFlash™ memory module standards. There are several USB flash drive products commercially available from SanDisk Corporation under its trademark "Cruzer®." USB flash drives are typically larger and shaped differently than the memory cards described above. One type of SIM card contains a large amount of memory capacity, so that the SIM card may be used for mass data storage applications in addition to SIM functions. An example of such a memory card is a MegaSIM™ card from SanDisk.

A host system may be connected to two or more memory cards at the same time. However, where two or more memory cards are connected to a host, data may be stored in different memory cards, so keeping track of where particular data is stored can become a burden. Failure to keep track of the location of data may result in loss of data or failure of the host system.

US 2005/0045721 discloses a method according to the preamble of claim 1.

According to an aspect of the present invention there is provided a method of generating identifiers for a memory card when a memory card is connected to a host. The method comprises maintaining a recorded relationship that maps memory card types to card identifiers in a one-to-one mapping scheme, determining that a first memory card of a first type is connected to the host and in response assigning a first card identifier for accessing first data stored in the first memory card to the first memory card and determining the type of the first memory card. The assigning the first card identifier comprises assigning the first card identifier using the recorded relationship and the determined type of the first memory card. The method further comprises using the first card identifier in a pathname for accessing the first memory card.

According to another aspect of the present invention there is provided a host device with capacity for two or more memory cards comprising a first physical interface for connecting the host device to a first memory card of a first type a second physical interface for connecting the host device to a second memory card of a second type and a storage medium in the host device. The storage medium stores software configured to associate a first card identifier for accessing first data stored in the first memory card with the first memory card in response to a determination that the first memory card is of the first type using a recorded relationship that maps memory card types to card identifiers in a one-to-one mapping scheme and the determined first type, associate a second card identifier for accessing second data stored in the second memory card with the second memory card in response to a determination that the second memory card is of the second type and using the recorded relationship and the determined second type and use the card identifiers in pathnames for accessing the memory cards.

According to another aspect of the present invention there is provided a toolkit for developing software that manages a host interface to two or more memory cards comprising a data recording medium, a mapping recorded in the data recording medium. The mapping includes a one-to-one relationship between types of memory card and card identifiers. The card identifiers are to be used in pathnames for accessing memory cards and software program recorded in the data recording medium. The software program includes a routine for mapping two or more memory cards to card identifiers for accessing data in the memory cards using the mapping recorded in the data recording medium and determined types of the memory cards.

In order to keep track of data in different memory cards, card identifiers may be assigned to individual cards. A card identifier may be assigned according to the type of memory card, so that for example, a MegaSIM card is assigned an identifier "M" while a Secure Digital card is assigned an "S" according to a predetermined mapping. Partitions within such cards may then be assigned volume identifiers. For example, volume identifiers may be assigned sequentially in each card. The combination of card identifier and volume identifier may then be used in a pathname when accessing data in a partition. Such a pathname clearly indicates the type of card being accessed, providing a convenient way to access different memory cards. Various method and system embodiments implement this approach examples of which are provided herein.

Further disclosed is a method of generating identifiers for memory cards and for volumes within memory cards, when two or more memory cards are connected to a host, may comprise: maintaining a recorded relationship that maps memory card types to card identifiers, in a one-to-one mapping scheme; determining that a first memory card of a first type is connected to the host and in response assigning a first card identifier to the first memory card, the first card identifier assigned according to the recorded relationship; and determining that the first memory card contains at least a first partition and a second partition and in response assigning a first volume identifier to the first partition and assigning a second volume identifier to the second partition. Other method embodiments are possible and can be implemented as exemplified here.

In one instance, an application may refer to a file stored in the first partition using a pathname that includes the first drive identifier and the first volume identifier. Also, as implemented, the first partition may be a public partition that can be accessed without authentication, and the second partition may be a hidden partition that requires authentication for gaining access to data stored therein. Moreover, a recorded relationship may be maintained in a table that includes a unique identifier for each of a plurality of memory card types, including the first memory card type, a second memory card type, and additional memory card types. The first and second memory card types may each be any one of MegaSIM, Secure Digital, Trusted Flash or like card. Furthermore, a host may be connected to a wireless network and the first memory card may include Subscriber Identity Module information that identifies the host to the wireless network.

Also disclosed is a host device with capacity for two or more memory cards may comprise: a first physical interface that connects the host device to a first memory card of a first type; a second physical interface that connects the host device to a second memory card of a second type; and a storage medium in the host device, the storage medium storing software that associates a first card identifier with the first memory card in response to a determination that the first memory card is of the first type and associates a second card identifier with the second memory card in response to a determination that the second memory card is of the second type. Different embodiments of a host device are possible and can be implemented as exemplified here.

In one instance, a host device may comprise additional software stored in the storage medium that associates a first partition of the first memory card with a first volume identifier and associates a second partition of the first memory card with a second volume identifier. A host device may comprise an application that accesses data in the first portion of the first memory card using the first card identifier and the first volume identifier in a pathname. A host device software may be generated using a software toolkit that specifies the first identifier for any card of the first type and specifies the second identifier for any card of the second type. The software toolkit may include routines that are incorporated in the software stored in a storage medium. As used with the method embodiments, the first and second memory card types may each be any one of MegaSIM, Secure Digital, Trusted Flash or like card. A first memory card, such **as a** SIM card, can be used by the host to connect to a wireless network.

Further disclosed is a toolkit for developing software that manages a host interface to two or more memory cards may comprise: a data recording medium; a mapping recorded in the data recording medium, the mapping including a one-to-one relationship between types of memory card and card identifiers; and software program recorded in the data recording medium, the software program including a routine for mapping two or more memory cards to card identifiers according to the mapping recorded in the data recording medium.

With such a tool kit, mapping may be recorded as a table that includes identifiers for memory card types including the MegaSIM, Secure Digital, and Trusted Flash and any other like card. A routine is typically stored in a dynamic-linked library or statically-linked library that contains additional routines. Then, a toolkit may comprise additional routines for managing interactions between a host and two or more memory cards.

FIG. 1 shows an example of a host connected to two memory cards.

FIG. 2 shows an example of a host connected to two memory cards, the host assigning card identifiers to each of the memory cards according to their memory card type.

FIG. 3A shows an example of a host having interfaces to two memory cards, and having an interface manager.

FIG. 3B shows an example of a host having interfaces to two memory cards, and having a host Operating System that includes an interface manager.

FIG. 3C shows an example of a host having interfaces to two memory cards, and having an application that includes an interface manager.

FIG. 4 shows a table that provides a one-to-one mapping between different types of memory cards and card identifiers.

FIG. 5 shows a flowchart for a scheme that assigns card identifiers to memory cards.

FIG. 6 shows an example of using a pathname that includes a card identifier, a volume identifier, and a filename.

FIG.7 shows a Software Development Kit used in a software development process.

Where two or more memory cards are connected to a host, the host may store data in different memory cards, so some system must be used to distinguish between memory cards. For some applications it is critical that data be stored in a particular type of memory card (e.g. for security purposes). With memory cards that are removable and interchangeable, keeping track of data stored in different memory cards is not always straight-forward. Assigning identifiers allows cards, or partitions within cards, to be conveniently managed.

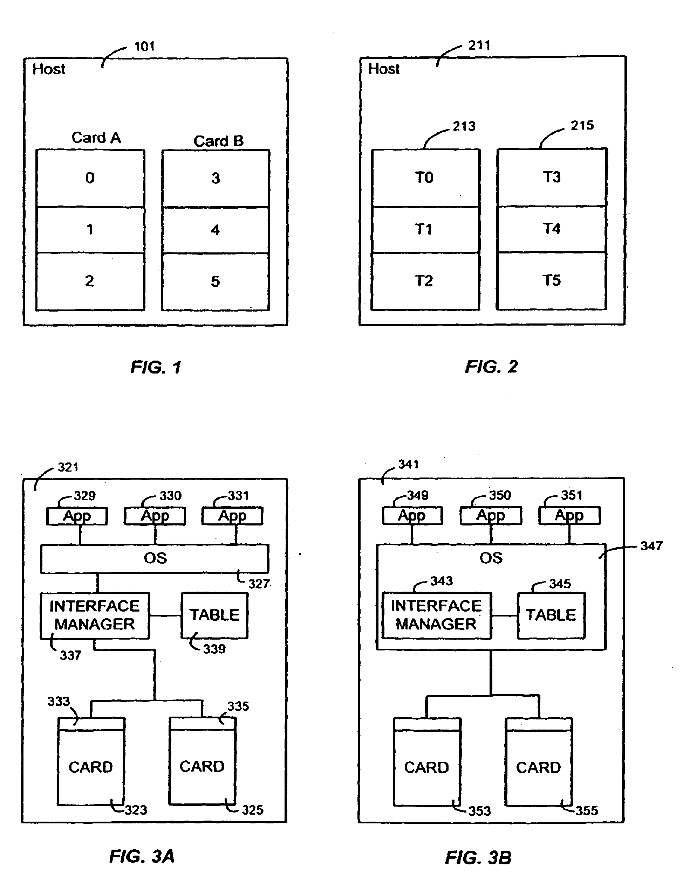

One possible scheme for assigning identifiers to memory cards, and to partitions within memory cards, assigns identifiers on a dynamic basis, so that the same card or partition may be assigned a different identifier depending on when it is connected to the host. FIG. 1 shows a host 101 which uses dynamic assignment of identifiers for each partition within two memory cards. Identifiers 0, 1, and 2 are assigned to partitions in card A, while identifiers 3, 4, and 5 are assigned to partitions in card B. Identifiers are assigned sequentially (generally during a power-up routine) to card A, then further identifiers are assigned to card B. When a new card is inserted, additional identifiers are assigned. This is similar to a dynamic system of assignment used by some PC operating systems that assigns drive letters to partitions in memory. The same partition may be assigned different drive letters at different times, which may be confusing, and may require applications, or the operating system, to perform additional functions to track stored data. Because the configuration of removable memory cards may change between one session and another, an application cannot simply use such a drive letter to refer to a partition during two or more sessions.

Memory card identifiers may be assigned in a predetermined manner based on the type of memory card. For example, a Trusted Flash card is assigned a particular identifier that is reserved exclusively for Trusted Flash cards, while a MegaSIM card is assigned a different identifier that is reserved exclusively for MegaSIM cards. Thus, rather than dynamically assigning identifiers to cards, identifiers are mapped to card types in a one-to-one mapping, and this mapping is used to assign the appropriate identifier to a particular memory card according to its card type.

In addition to identifying each card by a card identifier, a volume identifier may be assigned to each partition within a card. The same volume identifiers may be used in different cards, because the different card identifiers clearly identify each card and thus the combination of card identifier and volume identifier provides a unique identification of each partition, even if the same volume identifier is used in two or more cards.

FIG. 2 shows an example of a host 211 that is connected to two memory cards, each of a different card type. A Trusted Flash Card 213 is assigned a card identifier by the host. In this case, the card identifier for Trusted Flash Card 213 is "T." Each partition within Trusted Flash card 213 is then assigned a volume identifier in a sequential manner from "0" to "2." Thus, partitions of Trusted Flash card 213 are identified as T0, T1, and T2. A MegaSIM card 215 is also assigned a card identifier by the host. In this case, the card identifier for the MegaSIM card is "M." Each partition within MegaSIM card 215 is then assigned a volume identifier in a sequential manner from "0" to "2." Thus, partitions of the MegaSIM card 215 are identified as M0, M1, and M2.

FIG. 3A shows an example of a host 321 that is connected to two memory cards 323, 325. Host 321 includes an Operating System (OS) 327 and applications 329-331. Host 321 also includes interfaces 333, 335 to memory cards 323, 325, an interface manager 337 connected to the interfaces 333, 335, and a table 339. Interface manager 337 is responsible for assigning identifiers to memory cards and to partitions within the memory cards. Interface manager 337 provides these identifiers to OS 327 so that OS 327 and any applications running on OS 327 (or other applications in communication with OS 327) may use the identifiers when accessing data stored in the memory cards. Interface manager 337 may consist of dedicated hardware, a combination of dedicated hardware and software, or may be implemented in software that does not require dedicated hardware. In one example, interface manager 337 is developed using a Software Development Toolkit (SDK), which may contain some, or all of the routines necessary to implement the interface manager. In the example of FIG. 3A, interface manager 337 is a module that is separate from OS 327, but in communication with OS 327 and with interfaces 333, 335. This may be a physically separate hardware module, or a separate software module on shared hardware. Interface manager 337 is connected to a table 339, and interface manager 337 uses table 339 to determine which identifier to assign to a particular memory card.

FIG. 3B shows another example of a host 341 in which an interface manager 343 and a table 345 are part of an OS 347. As in FIG. 3A, there are applications 349-351 running on OS 347, which may access data within memory cards 353, 355. In this example, access to memory cards 353, 355 is managed by interface manager 343 in OS 347. Interface manager 343 assigns memory card identifiers and volume identifiers, which are then used by OS 347 and the applications 349-351 to access memory cards 353, 355. Such an OS, with an integrated interface manager, may be developed using an SDK that contains routines for the interface manager, and a table containing card identifiers.

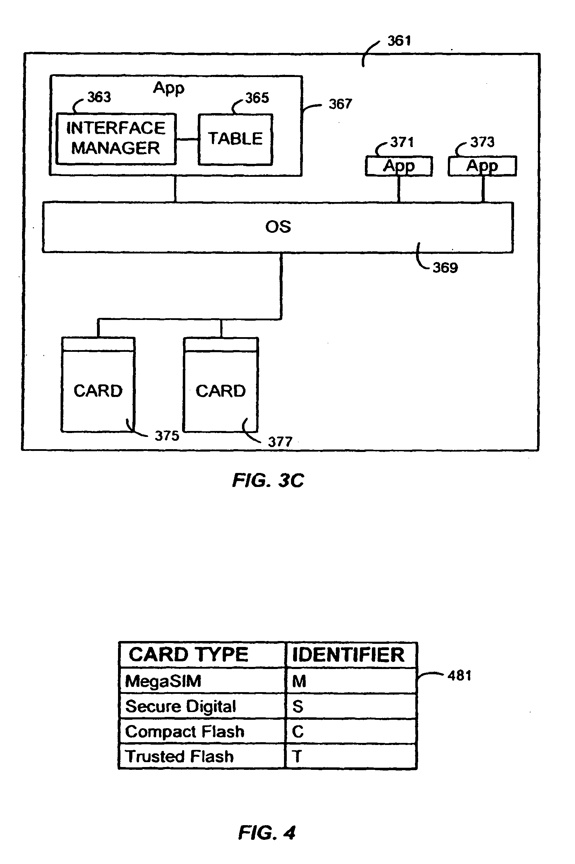

FIG. 3C shows another example of a host 361 in which an interface manager 363 and table 365 are included in an application 367. In this example, assignment of memory card identifiers and volume identifiers is performed by interface manager 363 within application 367. The assignment of identifiers by interface manager 363 may be instead of assignment by an OS 369, or may be in addition to some assignment by OS 369, with translation performed between identifiers. In addition, other applications 371, 373 may include additional interface managers and tables, each performing assignment of identifiers for cards 375, 377. Alternatively, all applications may use the same identifiers provided by the first interface manager. In this case, the host application that includes an interface manager uses certain functionalities to carry out the operation. One such functionality could be access to low-level driver Input/Output (I/O) functions. Then, the interface manager in the application may bypass other host OS services and use only host OS services that are needed. Such an application, which has an integrated interface manager, may be developed using an SDK that includes routines for the interface manager, and a table containing card identifiers.

FIG. 4 shows the contents of a table 481 such as the tables of FIGs. 3A-C. The table shows a recorded relationship between different memory card types and card identifiers. Thus, table 481 provides a one-to-one mapping between card types and card identifiers. Each memory card type is mapped to a card identifier that is exclusively used for cards of that type. Table 481 shows entries for cards including MegaSIM, Secure Digital, Compact Flash, and Trusted Flash. Other memory card types may also be recorded in the table, including any of the earlier listed types and any other memory card types. Table 481 shows single letters being used as card identifiers, specifically the first letter of the name of the card type (e.g. "M" for MegaSIM). This provides a compact and efficient system of identification. In other examples, different letters may be used, or different characters (e.g. numerals or symbols). In yet other examples, more than one letter or character may be used. While a table provides a simple arrangement for recording relationships between card types and identifiers, other structures may also be used to record such a relationship. The table, or other recorded relationship, is generally recorded within a data storage medium in the host system. Such a table may be updated as new types of memory card become available to allow legacy hosts to interface with newer types of cards.

In order to assign an identifier from a table such as table 481, an interface manager determines the type of memory card that is present. In some cases, this is determined by the physical interface to which it is connected. Certain memory card slots are exclusively used with one type of memory card, so that any card detected in such a memory card slot must be of the corresponding card type. However, some memory card slots may be used with more than one type of memory card. In this case, an interface manager may perform a detection routine to determine the type of card that is present. For example, the interface manager may interrogate the card to obtain identifying information, or may obtain the card type from another part of the host system that obtains this information from the memory card.

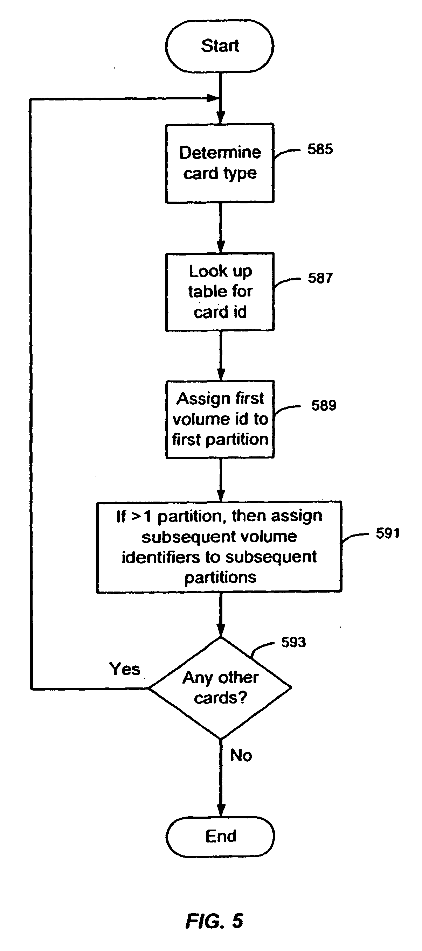

FIG. 5 provides a flowchart illustrating the operation of an interface manager. First, the type of card is identified 585, i.e. it is determined if the card is a MegaSIM card, SD card, Trusted Flash card, or some other type of card. Next, the appropriate card identifier is found 587 by looking up a table that contains a one-to-one mapping scheme between card types and card identifier. The appropriate card identifier from the table then becomes the identifier for the card. Next, a first volume identifier is assigned 589 to the first partition of the card. For example, the first volume identifier for the first partition of a card may be "0." Next, if there are any other partitions found on the card, subsequent volume identifiers are assigned to them 591. For example, volume identifiers 1, 2, 3... may be used. In other examples, different numerals may be used, or other characters such as letters may be used as volume identifiers. If there are any other cards 593, this sequence is then performed for any other cards that are under the control of the interface manager so that each partition found by the interface manager is assigned an identifier.

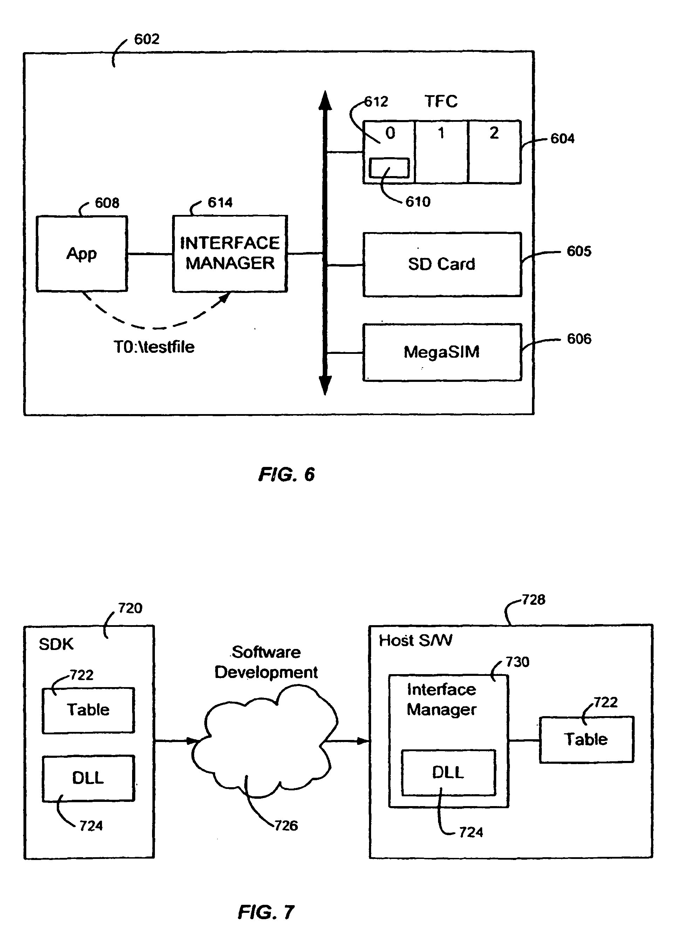

FIG. 6 shows a host 602 connected to three memory cards 604-606, each assigned a different card identifier according to memory card type. In other examples, four or more memory cards may be connected to a host and assigned card identifiers in this way. Host 602 of FIG. 6 includes an application 608 that accesses data in a memory card connected to host 602. In particular, application 608 accesses a file 610, called "testfile," that is stored in a first partition 612 of a Trusted Flash card 604. Because card 604 is Trusted Flash, it is assigned "T" as a card identifier, and because partition 612 is the first partition, it is assigned "0" as the volume identifier. Therefore, partition 602 can be identified by a combination of card identifier and volume identifier. Application 608 identifies file 610 by providing a pathname "T0:\testfile" that is used to access file 610 in Trusted Flash card 602. The pathname is provided to an interface manager 614 in this example, though in other examples, an OS (not shown in FIG. 6) or other components may manage such access. In other examples, a pathname may include additional portions that identify, for example, folders or other groupings within a partition.

In one example, the first partition of a card is a public access partition, which an application can access without providing any authentication. The second partition is a secure partition, or hidden partition, which an application can only access after providing some authentication. In this way, secure content may be kept in the second partition and may only be accessed by users having permission. For example, music or other content that is subject to restricted use may be stored in the second partition.

In one example, a host is a mobile device such as a cell phone or Personal Digital Assistant (PDA) that is in communication with a wireless network. A SIM card (MegaSIM card or other type of SIM card) is connected to the host to identify the host to the network and allow the host to communicate over the network. Where a MegaSIM card is used, additional content may be stored in the MegaSIM card. If a regular SIM card (not a MegaSIM card) is used, then it may not have storage capacity for a large volume of content. In this case, such content may be stored within a memory card, such as an SD card, Trusted Flash card or in the host's internal memory. Additional network-specific content may be stored in the MegaSIM card or in the TrustedFlash card. For example Mobile Network Operators (MNOs) may provide content in such cards that is accessible to their customers. Another memory card, such as an SD card, may be connected to the host and may store content that is unrelated to the network to which the host is connected. For example, the second memory card may store a user's music files or other content. Such content is specific to the user, and may be accessed by other hosts when the card is moved, but is unrelated to the network. Using identifiers that are specific to the type of memory card, the division between network-specific storage and user-specific storage is clear. An OS, and applications can easily direct access to one or the other by using appropriate identifiers

An interface manager, such as those discussed above, may be implemented by software that is created using a Software Development Toolkit (SDK). For example, a memory card manufacturer may provide an SDK to assist host manufacturers in integrating memory cards into their devices. SDKs may include software routines and data that are incorporated into host software as part of the OS, within applications, or in software that is separate from the OS and applications. For example, software routines from the SDK may be incorporated into an interface manager, such as interface managers described above, thus facilitating the integration of different memory cards with a host.

FIG. 7 shows an example of an SDK 720 that contains various components that can be used in a host, including a table 722 and a Dynamic Linked Library (DLL) 724. DLL 724 includes routines that can be used in larger software structures including applications or a host OS. SDK 720 is provided to a software developer (e.g. development of host software for a particular host) who then uses the SDK in a software development process 726 to produce host software 728. Host software 728 in this example includes table 722 provided by SDK 720 and also includes an interface manager 730 that includes DLL 724 from SDK 720. That is, certain routines used by interface manager 720 were provided in DLL 724 in SDK 720 (such routines may also be shared by other host software). Routines may also be provided in an SDK in a statically-linked library, or in any other convenient form. In some cases, an interface manager may consist entirely of routines provided by the SDK. In other examples, additional routines are provided to customize software (for a particular hardware, for example). The host software produced in this way may be a host OS, an application, or other software unit. For example, any of the host software arrangements of FIGs. 3A-C may be developed using SDKs as described.

Although the foregoing describes various aspects of these embodiments it is understood that modifications thereto and other embodiments with similar or different aspects are possible. Accordingly, the claims should not be limited to the embodiments described herein.

## Claims

1. A method of generating identifiers for a memory card (323, 325; 353, 355; 375, 377; 604 - 606), when a memory card (323, 325; 353, 355; 375, 377; 604 - 606) is connected to a host (101; 321; 341; 361; 602), comprising:
maintaining a recorded relationship (481) that maps memory card (323, 325; 353, 355; 375, 377; 604 - 606) types to card identifiers in a one-to-one mapping scheme;
determining that a first memory card (323, 325; 353, 355; 375, 377; 604 - 606) of a first type is connected to the host (101; 321; 341; 361; 602) and in response assigning a first card identifier for accessing first data stored in the first memory card (323, 325; 353, 355; 375, 377; 604 - 606) to the first memory card (323, 325; 353, 355; 375, 377; 604 - 606);
**CHARACTERISED BY**:
determining (585) the type of the first memory card (323, 325; 353, 355; 375, 377; 604 - 606); in that
said assigning the first card identifier comprises assigning the first card identifier using the recorded relationship (481) and the determined type of the first memory card (323, 325; 353, 355; 375, 377; 604 - 606); and by
using the first card identifier in a pathname for accessing the first memory card (323, 325; 353, 355; 375, 377; 604 - 606).

2. The method of Claim 1, further comprising:
determining that a second memory card (323, 325; 353, 355; 375, 377; 604 - 606) of a second type is connected to the host (101; 321; 341; 361; 602) and in response assigning a second card identifier for accessing second data stored in the second memory card (323, 325; 353, 355; 375, 377; 604 - 606) to the second memory card (323, 325; 353, 355; 375, 377; 604 - 606), the second card identifier assigned according to the recorded relationship (481).

3. The method of Claim 1 or Claim 2 further comprising:
determining that the first memory card (323, 325; 353, 355; 375, 377; 604 - 606) contains a first partition;
assigning (589) a first volume identifier to the first partition; and
combining the first volume identifier and the first card identifier to create a second identifier, for accessing second data stored in the first memory card (323, 325; 353, 355; 375, 377; 604 - 606), for the first memory card (323, 325; 353, 355; 375, 377; 604 - 606), the second identifier identifying the first memory card (323, 325; 353, 355; 375, 377; 604 - 606) by both the first volume identifier and the first card identifier.

4. The method of Claim 3 further comprising:
determining (591) that the first memory card (323, 325; 353, 355; 375, 377; 604 - 606) contains a second partition;
assigning (591) a second volume identifier to the second partition; and
combining the second volume identifier and the first card identifier to create a third identifier, for accessing third data stored in the first memory card (323, 325; 353, 355; 375, 377; 604 - 606), for the first memory card (323, 325; 353, 355; 375, 377; 604 - 606), the third identifier identifying the first memory card (323, 325; 353, 355; 375, 377; 604 - 606) by both the second volume identifier and the first card identifier.

5. The method of any preceding Claim wherein the recorded relationship comprises a table (481) that includes a unique identifier for each of the memory card types, including the first, second and any other memory card types.

6. A host device with capacity for two or more memory cards (323, 325; 353, 355; 375, 377; 604 - 606), comprising:
a first physical interface for connecting the host device (101; 321; 341; 361; 602) to a first memory card (323, 325; 353, 355; 375, 377; 604 - 606) of a first type;
a second physical interface for connecting the host device (101; 321; 341; 361; 602) to a second memory card (323, 325; 353, 355; 375, 377; 604 - 606) of a second type; and
a storage medium in the host device (101; 321; 341; 361; 602), the storage medium storing software configured to:
associate a first card identifier, for accessing first data stored in the first memory card (323, 325; 353, 355; 375, 377; 604 - 606), with the first memory card (323, 325; 353, 355; 375, 377; 604 - 606) in response to a determination that the first memory card (323, 325; 353, 355; 375, 377; 604 - 606) is of the first type using a recorded relationship (481) that maps memory card types to card identifiers in a one-to-one mapping scheme and the determined first type;
associate a second card identifier, for accessing second data stored in the second memory card (323, 325; 353, 355; 375, 377; 604 - 606), with the second memory card (323, 325; 353, 355; 375, 377; 604 - 606) in response to a determination that the second memory card (323, 325; 353, 355; 375, 377; 604 - 606) is of the second type and using the recorded relationship (481) and the determined second type; and
use the card identifiers in pathnames for accessing the memory cards (323, 325; 353, 355; 375, 377; 604 - 606).

7. The host device of Claim 6 further comprising additional software stored in the storage medium that associates a first partition of the first memory card (323, 325; 353, 355; 375, 377; 604 - 606) with a first volume identifier and associates a second partition of the first memory card (323, 325; 353, 355; 375, 377; 604 - 606) with a second volume identifier.

8. The host device of Claim 7 where the software further combines the first volume identifier and the first card identifier to create a third card identifier, for accessing third data stored in the first memory card (323, 325; 353, 355; 375, 377; 604 - 606), the third card identifier identifying the first memory card (323, 325; 353, 355; 375, 377; 604 - 606) by both the first volume identifier and the first card identifier.

9. The host device of any of Claims 6 to 8 wherein the software is generated using a software toolkit (720) that specifies the first identifier for any card (323, 325; 353, 355; 375, 377; 604 - 608) of the first type and specifies the second identifier for any card (323, 325; 353, 355; 375, 377; 604 - 606) of the second type.

10. The host device of Claim 9 wherein the software toolkit (720) includes routines that are incorporated in the software stored in the storage medium.

11. The method according to claim 1-5 or host device according to claims 6-10 wherein the first and second memory card (323, 325; 353, 355; 375, 377; 604 - 606) types are each ones of: MegaSIM, Secure Digital, and Trusted Flash.

12. The method according to claim 1-5 or host device according to claims 6-10 wherein the first memory card (323, 325; 353, 355; 375, 377; 604 - 606) is a SIM card.

13. A toolkit for developing software that manages a host interface (337; 343; 363; 614; 730) to two or more memory cards (323, 325; 353, 355; 375, 377; 604 - 606) comprising:
a data recording medium;
a mapping recorded in the data recording medium, the mapping including a one-to-one relationship (481) between types of memory card (323, 325; 353, 355; 375, 377; 604 - 606) and card identifiers, wherein the card identifiers are to be used in pathnames for accessing memory cards (323, 325; 353, 355; 375, 377; 604 - 606); and
software program recorded in the data recording medium, the software program including a routine for mapping two or more memory cards (323, 325; 353, 355; 375, 377; 604 - 606) to card identifiers for accessing data in the memory cards (323, 325; 353, 355; 375, 377; 604 - 606) using the mapping recorded in the data recording medium and determined types of the memory cards (323, 325; 353, 355; 375, 377; 604 - 606).

14. The toolkit of Claim 13 wherein the mapping is recorded as a table that includes identifiers for memory card (323, 325; 353, 355; 375, 377; 604 - 606) types including: MegaSIM, Secure Digital, and Trusted Flash.

15. The toolkit of Claim 13 or Claim 14 wherein the routine is stored in a dynamic-linked library or statically-linked library that contains additional routines.

16. The toolkit of any of Claims 13 to 15 where the routine further:
determines that a first memory card (323, 325; 353, 355; 375, 377; 604 - 606) among the memory cards (323, 325; 353, 355; 375, 377; 604 - 606) contains a first partition;
assigns a first volume identifier to the first partition; and
combines the first volume identifier and a first card identifier among the card identifiers to create a new identifier for the first memory card (323, 325; 353, 355; 375, 377; 604 - 606) and for accessing second data stored in the first memory card (323, 325; 353, 355; 375, 377; 604 - 606), the new identifier identifying the first memory card (323, 325; 353, 355; 375, 377; 604 - 606) by both the first volume identifier and the first card identifier.

17. The toolkit of any of Claims 13 to 16 further comprising additional routines for managing interactions between the host and the two or more memory cards (323, 325; 353, 355; 375, 377; 604 - 606).

## Patentansprüche

1. Verfahren zum Erzeugen von Kennungen für eine Speicherkarte (323, 325; 353, 355; 375, 377; 604 - 606), wenn eine Speicherkarte (323, 325; 353, 355; 375, 377; 604 - 606) mit einem Host (101; 321; 341; 361; 602) verbunden wird, umfassend:
Verwalten einer aufgezeichneten Beziehung (481), die Typen von Speicherkarten (323, 325; 353, 355; 375, 377; 604 - 606) in einem eindeutigen Zuordnungsschema Kartenkennungen zuordnet;
Bestimmen, dass eine erste Speicherkarte (323, 325; 353, 355; 375, 377; 604 - 606) eines ersten Typs mit dem Host (101; 321; 341; 361; 602) verbunden wird, und als Antwort darauf erfolgendes Zuweisen einer ersten Kartenkennung zu der ersten Speicherkarte (323, 325; 353, 355; 375, 377; 604 - 606), und zwar zum Zugreifen auf erste Daten, die in der ersten Speicherkarte (323, 325; 353, 355; 375, 377; 604 - 606) gespeichert sind;
**gekennzeichnet durch**:
Bestimmen (585) des Typs der ersten Speicherkarte (323, 325; 353, 355; 375, 377; 604 - 606); **dadurch**, dass
das Zuweisen der ersten Kartenkennung umfasst: Zuweisen der ersten Kartenkennung unter Verwendung der aufgezeichneten Beziehung (481) und des bestimmten Typs der ersten Speicherkarte (323, 325; 353, 355; 375, 377; 604 - 606); und **durch**
Verwenden der ersten Kartenkennung in einem Pfadnamen zum Zugreifen auf die erste Speicherkarte (323, 325; 353, 355; 375, 377; 604 - 606).

2. Verfahren nach Anspruch 1, ferner umfassend:
Bestimmen, dass eine zweite Speicherkarte (323, 325; 353, 355; 375, 377; 604 - 606) eines zweiten Typs mit dem Host (101; 321; 341; 361; 602) verbunden wird, und als Antwort darauf erfolgendes Zuweisen einer zweiten Kartenkennung zu der zweiten Speicherkarte (323, 325; 353, 355; 375, 377; 604 - 606), und zwar zum Zugreifen auf zweite Daten, die in der zweiten Speicherkarte (323, 325; 353, 355; 375, 377; 604 - 606) gespeichert sind, wobei die zweite Kartenkennung gemäß der aufgezeichneten Beziehung (481) zugewiesen wird.

3. Verfahren nach Anspruch 1 oder 2, ferner umfassend:
Bestimmen, dass die erste Speicherkarte (323, 325; 353, 355; 375, 377; 604 - 606) eine erste Partition enthält;
Zuweisen (589) einer ersten Laufwerkskennung zu der ersten Partition; und
Kombinieren der ersten Laufwerkskennung und der ersten Kartenkennung, um eine zweite Kennung für die erste Speicherkarte (323, 325; 353, 355; 375, 377; 604 - 606) zu erzeugen, und zwar zum Zugreifen auf zweite Daten, die in der ersten Speicherkarte (323, 325; 353, 355; 375, 377; 604 - 606) gespeichert sind, wobei die zweite Kennung die erste Speicherkarte (323, 325; 353, 355; 375, 377; 604 - 606) sowohl durch die erste Laufwerkskennung als auch durch die erste Kartenkennung identifiziert.

4. Verfahren nach Anspruch 3, ferner umfassend:
Bestimmen (591), dass die erste Speicherkarte (323, 325; 353, 355; 375, 377; 604 - 606) eine zweite Partition enthält;
Zuweisen (591) einer zweiten Laufwerkskennung zu der zweiten Partition; und
Kombinieren der zweiten Laufwerkskennung und der ersten Kartenkennung, um eine dritte Kennung für die erste Speicherkarte (323, 325; 353, 355; 375, 377; 604 - 606) zu erzeugen, und zwar zum Zugreifen auf dritte Daten, die in der ersten Speicherkarte (323, 325; 353, 355; 375, 377; 604 - 606) gespeichert sind, wobei die dritte Kennung die erste Speicherkarte (323, 325; 353, 355; 375, 377; 604 - 606) sowohl durch die zweite Laufwerkskennung als auch durch die erste Kartenkennung identifiziert.

5. Verfahren nach einem der vorhergehenden Ansprüche, worin die aufgezeichnete Beziehung eine Tabelle (481) umfasst, die eine eindeutige Kennung für jeden der Speicherkartentypen einschließlich des ersten, des zweiten und jedweder anderen Speicherkartentypen einschließt.

6. Hostvorrichtung mit Aufnahmefähigkeit für zwei oder mehr Speicherkarten (323, 325; 353, 355; 375, 377; 604 - 606), umfassend:
eine erste physische Schnittstelle zum Verbinden der Hostvorrichtung (101; 321; 341; 361; 602) mit einer ersten Speicherkarte (323, 325; 353, 355; 375, 377; 604 - 606) eines ersten Typs;
eine zweite physische Schnittstelle zum Verbinden der Hostvorrichtung (101; 321; 341; 361; 602) mit einer zweiten Speicherkarte (323, 325; 353, 355; 375, 377; 604 - 606) eines zweiten Typs; und
ein Speichermedium in der Hostvorrichtung (101; 321; 341; 361; 602), wobei das Speichermedium Software speichert, die konfiguriert ist zum:
Verknüpfen einer ersten Kartenkennung mit der ersten Speicherkarte (323, 325; 353, 355; 375, 377; 604 - 606) zum Zugreifen auf erste Daten, die in der ersten Speicherkarte (323, 325; 353, 355; 375, 377; 604 - 606) gespeichert sind, und zwar als Antwort auf eine Bestimmung, dass die erste Speicherkarte (323, 325; 353, 355; 375, 377; 604 - 606) vom ersten Typ ist, unter Verwendung einer aufgezeichneten Beziehung (481), die Speicherkartentypen in einem eindeutigen Zuordnungsschema Kartenkennungen zuordnet, und des bestimmten ersten Typs;
Verknüpfen einer zweiten Kartenkennung mit der zweiten Speicherkarte (323, 325; 353, 355; 375, 377; 604 - 606) zum Zugreifen auf zweite Daten, die in der zweiten Speicherkarte (323, 325; 353, 355; 375, 377; 604 - 606) gespeichert sind, und zwar als Antwort auf eine Bestimmung, dass die zweite Speicherkarte (323, 325; 353, 355; 375, 377; 604 - 606) vom zweiten Typ ist und unter Verwendung der aufgezeichneten Beziehung (481) und des bestimmten zweiten Typs; und
Verwenden der Kartenkennungen in Pfadnamen zum Zugreifen auf die Speicherkarten (323, 325; 353, 355; 375, 377; 604 - 606).

7. Hostvorrichtung nach Anspruch 6, ferner umfassend zusätzliche in dem Speichermedium gespeicherte Software, die eine erste Partition der ersten Speicherkarte (323, 325; 353, 355; 375, 377; 604 - 606) mit einer ersten Laufwerkskennung verknüpft und eine zweite Partition der ersten Speicherkarte (323, 325; 353, 355; 375, 377; 604 - 606) mit einer zweiten Laufwerkskennung verknüpft.

8. Hostvorrichtung nach Anspruch 7, worin die Software ferner die erste Laufwerkskennung und die erste Kartenkennung kombiniert, um eine dritte Kennung zum Zugreifen auf dritte Daten, die in der ersten Speicherkarte (323, 325; 353, 355; 375, 377; 604 - 606) gespeichert sind, zu erzeugen, wobei die dritte Kennung die erste Speicherkarte (323, 325; 353, 355; 375, 377; 604 - 606) sowohl durch die erste Laufwerkskennung als auch durch die erste Kartenkennung identifiziert.

9. Hostvorrichtung nach Anspruch 6 bis 8, worin die Software unter Verwendung eines Software-Werkzeugkastens (720) erzeugt wird, der die erste Kennung für jegliche Karte (323, 325; 353, 355; 375, 377; 604 - 606) des ersten Typs und die zweite Kennung für jegliche Karte (323, 325; 353, 355; 375, 377; 604 - 606) des zweiten Typs festlegt.

10. Hostvorrichtung nach Anspruch 9, worin der Software-Werkzeugkasten (720) Routinen einschließt, die in die im Speichermedium gespeicherte Software einbezogen werden.

11. Verfahren nach Anspruch 1 bis 5 oder Hostvorrichtung nach Anspruch 6 bis 10, worin der erste und der zweite Typ von Speicherkarten (323, 325; 353, 355; 375, 377; 604 - 606) jeglicher von Folgendem sind: MegaSIM, Secure Digital und Trusted Flash.

12. Verfahren nach Anspruch 1 bis 5 oder Hostvorrichtung nach Anspruch 6 bis 10, worin die erste Speicherkarte (323, 325; 353, 355; 375, 377; 604 - 606) eine SIM-Karte ist.

13. Werkzeugkasten zum Entwickeln von Software, die eine Host-Schnittstelle (337; 343; 363; 614; 730) zu zwei oder mehr Speicherkarten (323, 325; 353, 355; 375, 377; 604 - 606) verwaltet, umfassend:
ein Datenaufzeichnungsmedium;
eine in dem Datenaufzeichnungsmedium aufgezeichnete Zuordnung, wobei die Zuordnung eine eindeutige Beziehung (481) zwischen Typen von Speicherkarten (323, 325; 353, 355; 375, 377; 604 - 606) und Kartenkennungen einschließt, worin die Kartenkennungen in Pfadnamen zum Zugreifen auf Speicherkarten (323, 325; 353, 355; 375, 377; 604 - 606) verwendet werden sollen; und
ein in dem Datenaufzeichnungsmedium aufgezeichnetes Softwareprogramm, wobei das Softwareprogramm eine Routine zum Zuordnen von zwei oder mehr Speicherkarten (323, 325; 353, 355; 375, 377; 604 - 606) zu Kartenkennungen zum Zugreifen auf Daten in den Speicherkarten (323, 325; 353, 355; 375, 377; 604 - 606) einschließt, und zwar unter Verwendung der in dem Datenaufzeichnungsmedium aufgezeichneten Zuordnung und bestimmter Typen der Speicherkarten (323, 325; 353, 355; 375, 377; 604 - 606).

14. Werkzeugkasten nach Anspruch 13, worin die Zuordnung als eine Tabelle ausgezeichnet wird, die Kennungen für Typen von Speicherkarten (323, 325; 353, 355; 375, 377; 604 - 606) einschließt, einschließlich: MegaSIM, Secure Digital und Trusted Flash.

15. Werkzeugkasten nach Anspruch 13 oder 14, worin die Routine in einer dynamisch verlinkten Bibliothek oder einer statisch verlinkten Bibliothek, die weitere Routinen enthält, gespeichert ist.

16. Werkzeugkasten nach einem der Ansprüche 13 bis 15, worin die Routine ferner:
bestimmt, dass eine erste Speicherkarte (323, 325; 353, 355; 375, 377; 604 - 606) unter den Speicherkarten (323, 325; 353, 355; 375, 377; 604 - 606) eine erste Partition enthält;
der ersten Partition eine erste Laufwerkskennung zuweist; und
die erste Laufwerkskennung und eine erste Kartenkennung unter den Kartenkennungen kombiniert, um eine neue Kennung für die erste Speicherkarte (323, 325; 353, 355; 375, 377; 604 - 606) zu erzeugen, und zwar zum Zugreifen auf zweite Daten, die in der ersten Speicherkarte (323, 325; 353, 355; 375, 377; 604 - 606) gespeichert sind, wobei die neue Kennung die erste Speicherkarte (323, 325; 353, 355; 375, 377; 604 - 606) sowohl durch die erste Laufwerkskenuung als auch durch die erste Kartenkennung identifiziert.

17. Werkzeugkasten nach einem der Ansprüche 13 bis 16, ferner weitere Routinen zum Verwalten von Interaktionen zwischen dem Host und den zwei oder mehr Speicherkarten (323, 325; 353, 355; 375, 377; 604 - 606) umfassend.

## Revendications

1. Procédé de génération d'identifiants pour une carte mémoire (323, 325 ; 353, 355 ; 375, 377 ; 604 - 606), lorsqu'une carte mémoire (323, 325 ; 353, 355 ; 375, 377 ; 604 - 606) est connectée à un hôte (101 ; 321 ; 341 ; 361 ; 602), consistant à :
maintenir une relation enregistrée (481) qui met en concordance des types de carte mémoire (323, 325 ; 353, 355 ; 375, 377 ; 604 - 606) sur des identifiants de cartes dans un schéma de mise en concordance injective ;
déterminer qu'une première carte mémoire (323, 325 ; 353, 355 ; 375, 377 ; 604 - 606) d'un premier type est connectée à l'hôte (101 ; 321 ; 341 ; 361 ; 602) et, en réponse, affecter un premier identifiant de carte, en vue d'accéder à des premières données stockées dans la première carte mémoire (323, 325 ; 353, 355 ; 375, 377 ; 604 - 606), à la première carte mémoire (323, 325 ; 353, 355 ; 375, 377 ; 604 - 606) ;
**caractérisé par** :
la détermination (585) du type de la première carte mémoire (323, 325 ; 353, 355 ; 375, 377 ; 604 - 606), en ce que
ladite affectation du premier identifiant de carte consiste à affecter le premier identifiant de carte en utilisant la relation enregistrée (481) et le type déterminé de la première carte mémoire (323, 325 ; 353, 355 ; 375, 377 ; 604 - 606) ; et par
l'utilisation du premier identifiant de carte dans un nom de chemin d'accès permettant d'accéder à la première carte mémoire (323, 325 ; 353, 355 ; 375, 377 ; 604 - 606).

2. Procédé selon la revendication 1, consistant en outre à :
déterminer qu'une seconde carte mémoire (323, 325 ; 353, 355 ; 375, 377 ; 604 - 606) d'un second type est connectée à l'hôte (101 ; 321 ; 341 ; 361 ; 602) et, en réponse, affecter un deuxième identifiant de carte, en vue d'accéder à des deuxièmes données stockées dans la seconde carte mémoire (323, 325 ; 353, 355 ; 375, 377 ; 604 - 606), à la seconde carte mémoire (323, 325 ; 353, 355 ; 375, 377 ; 604 - 606), le deuxième identifiant de carte étant affecté en fonction de la relation enregistrée (481).

3. Procédé selon la revendication 1 ou 2, consistant en outre à :
déterminer que la première carte mémoire (323, 325 ; 353, 355 ; 375, 377 ; 604 - 606) contient une première partition ;
affecter (589) un premier identifiant de volume à la première partition ; et
combiner le premier identifiant de volume et le premier identifiant de carte en vue de créer un deuxième identifiant, afin d'accéder à des deuxièmes données stockées dans la première carte mémoire (323, 325 ; 353, 355 ; 375, 377 ; 604 - 606), pour la première carte mémoire (323, 325 ; 353, 355 ; 375, 377 ; 604 - 606), le deuxième identifiant identifiant la première carte mémoire (323, 325 ; 353, 355 ; 375, 377 ; 604 - 606) à la fois par le biais du premier identifiant de volume et du premier identifiant de carte.

4. Procédé selon la revendication 3, consistant en outre à :
déterminer (591) que la première carte mémoire (323, 325 ; 353, 355 ; 375, 377 ; 604 - 606) contient une seconde partition ;
affecter (591) un deuxième identifiant de volume à la seconde partition ; et
combiner le deuxième identifiant de volume et le premier identifiant de carte en vue de créer un troisième identifiant, afin d'accéder à des troisièmes données stockées dans la première carte mémoire (323, 325 ; 353, 355 ; 375, 377 ; 604 - 606), pour la première carte mémoire (323, 325 ; 353, 355 ; 375, 377 ; 604 - 606), le troisième identifiant identifiant la première carte mémoire (323, 325 ; 353, 355 ; 375, 377 ; 604 - 606) à la fois par le biais du deuxième identifiant de volume et du premier identifiant de carte.

5. Procédé selon l'une quelconque des revendications précédentes, dans lequel la relation enregistrée comprend une table (481) qui inclut un identifiant unique pour chacun des types de carte mémoire, notamment le premier de carte mémoire, le deuxième de carte mémoire et tous les autres types de carte mémoire.

6. Dispositif hôte doté d'une capacité de deux cartes mémoire ou plus (323, 325 ; 353, 355 ; 375, 377 ; 604 - 606), comprenant :
une première interface physique destinée à connecter le dispositif hôte (101 ; 321 ; 341 ; 361 ; 602) à une première carte mémoire (323, 325 ; 353, 355 ; 375, 377 ; 604 - 606) d'un premier type ;
une seconde interface physique destinée à connecter le dispositif hôte (101 ; 321 ; 341 ; 361 ; 602) à une seconde carte mémoire (323, 325 ; 353, 355 ; 375, 377 ; 604 - 606) d'un second type ; et
un support de stockage dans le dispositif hôte (101 ; 321 ; 341 ; 361 ; 602), le support de stockage stockant un logiciel configuré de manière à :
associer un premier identifiant de carte, en vue d'accéder à des premières données stockées dans la première carte mémoire (323, 325 ; 353, 355 ; 375, 377 ; 604 - 606), à la première carte mémoire (323, 325 ; 353, 355 ; 375, 377 ; 604 - 606), en réponse à une détermination selon laquelle la première carte mémoire (323, 325 ; 353, 355 ; 375, 377 ; 604 - 606) est du premier type, utilisant une relation enregistrée (481), qui met en concordance des types de carte mémoire sur des identifiants de cartes dans un schéma de mise en concordance injective, et le premier type déterminé ;
associer un deuxième identifiant de carte, en vue d'accéder à des deuxièmes données stockées dans la seconde carte mémoire (323, 325 ; 353, 355 ; 375, 377 ; 604 - 606), à la seconde carte mémoire (323, 325 ; 353, 355 ; 375, 377 ; 604 - 606), en réponse à une détermination selon laquelle la seconde carte mémoire (323, 325 ; 353, 355 ; 375, 377 ; 604 - 606) est du second type, et utilisant la relation enregistrée (481) et le second type déterminé ; et
utiliser les identifiants de cartes dans des noms de chemin d'accès permettant d'accéder aux cartes mémoire (323, 325 ; 353, 355 ; 375, 377 ; 604 - 606).

7. Dispositif hôte selon la revendication 6, comprenant en outre un logiciel supplémentaire stocké dans le support de stockage qui associe une première partition de la première carte mémoire (323, 325 ; 353, 355 ; 375, 377 ; 604 - 606) à un premier identifiant de volume, et qui associe une seconde partition de la première carte mémoire (323, 325 ; 353, 355 ; 375, 377 ; 604 - 606) à un deuxième identifiant de volume,

8. Dispositif hôte selon la revendication 7, où le logiciel combine en outre le premier identifiant de volume et le premier identifiant de carte en vue de créer un troisième identifiant de carte, afin d'accéder à des troisièmes données stockées dans la première carte mémoire (323, 325 ; 353, 355 ; 375, 377 ; 604 - 606), le troisième identifiant de carte identifiant la première carte mémoire (323, 325 ; 353, 355 ; 375, 377 ; 604 - 606) à la fois par le biais du premier identifiant de volume et du premier identifiant de carte.

9. Dispositif hôte selon les revendications 6 à 8, dans lequel le logiciel est généré en utilisant une trousse d'outils logiciels (720) qui spécifie le premier identifiant pour une carte quelconque (323, 325 ; 353, 355 ; 375, 377 ; 604 - 606) du premier type, et qui spécifie le deuxième identifiant pour une carte quelconque (323, 325 ; 353, 355 ; 375, 377 ; 604 - 606) du second type.

10. Dispositif hôte selon la revendication 9, dans lequel la trousse d'outils logiciels (720) comprend des routines qui sont intégrées dans le logiciel stocké dans le support de stockage.

11. Procédé selon les revendications 1 à 5 ou dispositif hôte selon les revendications 6 à 10, dans lequel les premier et second types de carte mémoire (323, 325 ; 353, 355 ; 375, 377 ; 604 - 606) sont respectivement des types parmi les suivants : une carte mémoire MegaSIM, une carte mémoire flash (SD), et une carte mémoire flash sécurisée.

12. Procédé selon les revendications 1 à 5 ou dispositif hôte selon les revendications 6 à 10, dans lequel la première carte mémoire (323, 325 ; 353, 355 ; 375, 377 ; 604 - 606) est une carte SIM.

13. Trousse d'outils destinée à développer un logiciel qui gère une interface d'hôte (337 ; 343 ; 363 ; 614 ; 730) vers deux cartes mémoire ou plus (323, 325 ; 353, 355 ; 375, 377 ; 604 - 606), comprenant :
un support d'enregistrement de données ;
une mise en concordance enregistrée dans le support d'enregistrement de données, la mise en concordance incluant une relation injective (481) entre des types de carte mémoire (323, 325 ; 353, 355 ; 375, 377 ; 604 - 606) et des identifiants de cartes, dans laquelle les identifiants de cartes doivent être utilisés dans des noms de chemin d'accès permettant d'accéder aux cartes mémoire (323, 325 ; 353, 355 ; 375, 377 ; 604 - 606) ; et
un programme logiciel enregistré dans le support d'enregistrement de données, le programme logiciel incluant une routine pour mettre en concordance deux cartes mémoire ou plus (323, 325 ; 353, 355 ; 375, 377 ; 604 - 606) sur des identifiants de cartes afin d'accéder à des données dans les cartes mémoire (323, 325 ; 353, 355 ; 375, 377 ; 604 - 606) en utilisant la mise en concordance enregistrée dans le support d'enregistrement de données et des types déterminés des cartes mémoire (323, 325 ; 353, 355 ; 375, 377 ; 604 - 606).

14. Trousse d'outils selon la revendication 13, dans laquelle la mise en concordance est enregistrée sous la forme d'une table qui inclut des identifiants pour des types de carte mémoire (323, 325 ; 353, 355 ; 375, 377 ; 604 - 606) incluant ; une carte mémoire MegaSIM, une carte mémoire flash (SD), et une carte mémoire flash sécurisée.

15. Trousse d'outils selon la revendication 13 ou 14, dans laquelle la routine est stockée dans une bibliothèque de liens dynamiques ou une bibliothèque de liens statistiques qui contient des routines supplémentaires.

16. Trousse d'outils selon l'une quelconque des revendications 13 à 15, où la routine en outre :
détermine qu'une première carte mémoire (323, 325 ; 353, 355 ; 375, 377 ; 604 - 606) parmi les cartes mémoire (323, 325 ; 353, 355 ; 375, 377 ; 604 - 606) contient une première partition ;
affecte un premier identifiant de volume à la première partition ; et
combine le premier identifiant de volume et un premier identifiant de carte parmi les identifiants de cartes, en vue de créer un nouvel identifiant pour la première carte mémoire (323, 325 ; 353, 355 ; 375, 377 ; 604 - 606) et permettant d'accéder à des deuxièmes données stockées dans la première carte mémoire (323, 325 ; 353, 355 ; 375, 377 ; 604 - 606), le nouvel identifiant identifiant la première carte mémoire (323, 325 ; 353, 355 ; 375, 377 ; 604 - 606) à la fois par le biais du premier identifiant de volume et du premier identifiant de carte.

17. Trousse d'outils selon l'une quelconque des revendications 13 à 16, comprenant en outre des routines supplémentaires destinées à gérer les interactions entre l'hôte et les deux cartes mémoire ou plus (323, 325 ; 353, 355 ; 375, 377 ; 604 - 606).
